(19) Europäisches Patentamt
European Patent Office
Office européen des brevets

(11) EP 1 887 233 A2

(12) **EUROPÄISCHE PATENTANMELDUNG**

(43) Veröffentlichungstag:
**13.02.2008  Patentblatt 2008/07**

(51) Int Cl.:
*F16B 25/00* *(2006.01)*    *F16B 33/02* *(2006.01)*

(21) Anmeldenummer: **07014042.1**

(22) Anmeldetag: **18.07.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **08.08.2006  DE 102006037006**

(71) Anmelder: **TOGE-Dübel A. Gerhard KG**
**90431 Nürnberg (DE)**

(72) Erfinder: **Gerhard, Anton**
**90427 Nürnberg (DE)**

(74) Vertreter: **Rau, Albrecht et al**
**Patentanwälte**
**Rau, Schneck & Hübner**
**Königstrasse 2**
**90402 Nürnberg (DE)**

(54) **Selbstschneidende Schraube, insbesondere  Beton-Schraube**

(57)    Eine selbstschneidende Schraube weist einen Einführ-Abschnitt (3) auf, an den sich ein Schneid-Abschnitt (5) und an diesen ein Trag-Abschnitt (7) anschließt. Am Schneid-Abschnitt (5) ist ein Schneid-Gewinde (6) ausgebildet, während am Trag-Abschnitt (7) ein Trag-Gewinde (8) ausgebildet ist. Der Durchmesser $D_6$ des Schneid-Gewindes (6) ist größer als der Durchmesser $D_8$ des Trag-Gewindes (8). Weiterhin gilt, dass die Dicke a des Schneid-Gewindes (6) größer ist als die Dicke b des Trag-Gewindes (8), wobei diese Dickenangaben jeweils auf eine gemeinsame Zylindermantel-Fläche (15) um die Mittel-Längs-Achse (14) bezogen sind.

Fig. 4

EP 1 887 233 A2

**Beschreibung**

Die Erfindung betrifft eine selbstschneidende Schraube, insbesondere Beton-Schraube nach dem Oberbegriff des Anspruchs 1.

Bei derartigen bekannten Beton-Schrauben weist das Trag-Gewinde, das sich in Eindrehrichtung der Schraube hinter dem Schneid-Gewinde befindet, einen geringfügig geringeren Durchmesser als das Schneid-Gewinde auf. Es hat sich gezeigt, dass trotz dieser Maßnahme das zum Eindrehen der selbstschneidenden Schraube in Beton erforderliche Drehmoment sehr hoch ist.

Der Erfindung liegt daher die Aufgabe zugrunde, eine selbstschneidende Schraube der gattungsgemäßen Art so weiter zu bilden, dass das zum Eindrehen erforderliche Drehmoment deutlich reduziert wird.

Diese Aufgabe wird erfindungsgemäß durch die Ausgestaltung nach dem Kennzeichnungsteil des Anspruchs 1 erreicht. Durch die erfindungsgemäßen nur scheinbar einfachen Maßnahmen wird erreicht, dass das Traggewinde im Bereich jeweils einer um die Mittel-Längs-Achse der Schraube gelegten Zylindermantel-Fläche eine geringfügig kleinere Dicke aufweist als das Schneid-Gewinde. Dadurch wird die Flanken-Pressung gegenüber der in den Beton geschnittenen Gewindenut im Bereich des Trag-Gewindes deutlich reduziert. Die Gewindenut wird also vom Schneid-Gewinde geschnitten. Das Trag-Gewinde wird verhältnismäßig frei, also ohne nennenswerte Flankenpressung, in diese Nut eingeschraubt. Da die erwähnte Dicke in axialer Richtung nur geringfügig geringer als die des Schneid-Gewindes ist, ist die Tragwirkung des Trag-Gewindes nicht reduziert.

Die Unteransprüche geben vorteilhafte Ausgestaltungen der Erfindung wieder.

Weitere Vorteile, Merkmale und Einzelheiten ergeben sich aus der nachfolgenden Beschreibung eines Ausführungsbeispieles anhand der Zeichnung. Es zeigt

Fig. 1      eine Beton-Schraube nach der Erfindung in einer Längsansicht,

Fig. 2      einen Querschnitt durch das Schneid-Gewinde der Beton-Schraube gemäß der Schnittlinie II-II in Fig. 1 in gegenüber Fig. 1 vergrößerter Darstellung,

Fig. 3      einen Querschnitt durch das Trag-Gewinde der Beton-Schraube gemäß der Schnittlinie III-III in Fig. 1 in gegenüber Fig. 1 stark vergrößerter Darstellung und

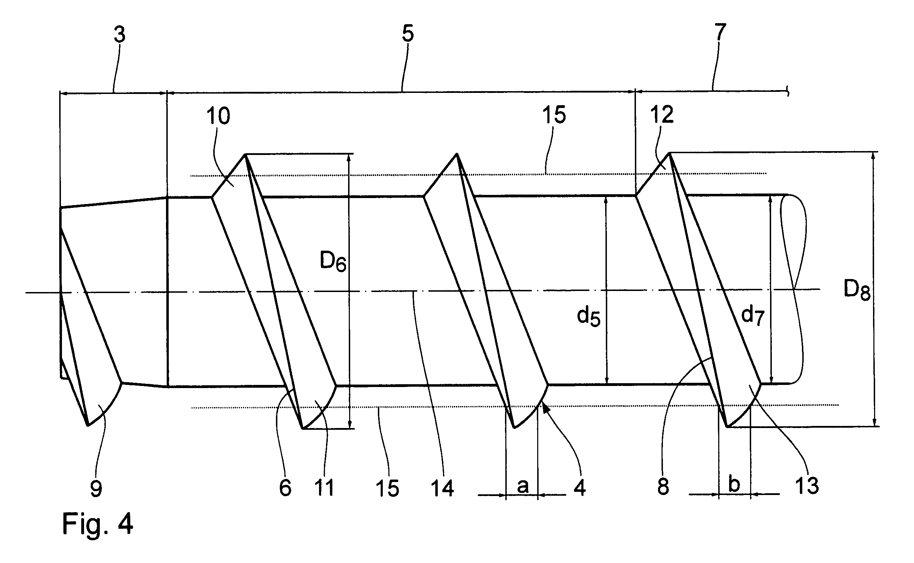

Fig. 4      eine Teil-Draufsicht auf die Beton-Schraube in gegenüber Fig. 1 stark vergrößerter Darstellung.

Die in der Zeichnung dargestellte Beton-Schraube weist einen im Wesentlichen zylindrischen Kern 1 auf, an dessen einem Ende ein Sechskant-Kopf 2 ausgebildet ist. Am anderen Ende, dem so genannten Einführende, geht der Kern 1 in einen sich leicht verjüngenden Einführ-Abschnitt 3 über. Die Schraube weist ein Gewinde 4 auf.

Die Schraube weist einen sich an den Einführ-Abschnitt 3 anschließenden Schneid-Abschnitt 5 auf, der sich etwa über zwei Gewindegänge vom Übergang des Einführ-Abschnitts 3 in den im Wesentlichen zylindrischen Kern 1 erstreckt. In diesem Bereich ist das Gewinde 4 als Schneid-Gewinde 6 ausgebildet. An den Schneid-Abschnitt 5 schließt sich ein Trag-Abschnitt 7 an, in dem das Gewinde 4 als Trag-Gewinde 8 ausgebildet ist.

Der Einführ-Abschnitt 3 verjüngt sich bis zu seinem freien Ende in bekannter Weise auf einen Durchmesser, der gleich oder geringfügig geringer ist als der Durchmesser einer Bohrung, in die die selbstschneidende Schraube eingeführt werden soll. Auch das Gewinde 4 ist in diesem Bereich als sich zum freien Ende hin verjüngendes Einführ-Gewinde 9 ausgebildet, wobei dieses Einführ-Gewinde 9 sich über eine halbe bis eine Umdrehung der Schraube erstreckt. An dieses Einführ-Gewinde 9 schließt sich dann das Schneid-Gewinde 6 an.

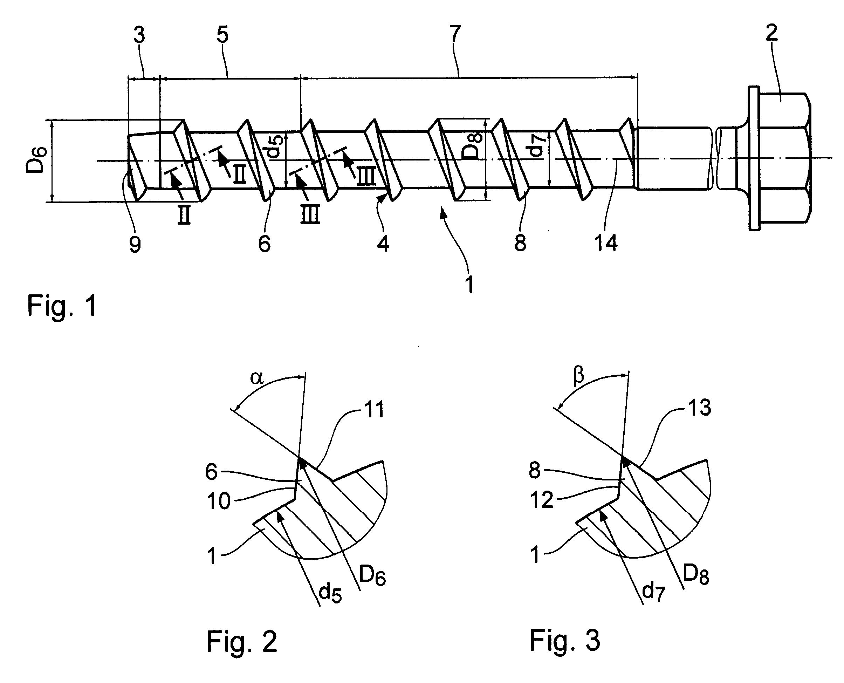

Wie sich aus den Fig. 2 und 3 ergibt, hat das Gewinde 4 sowohl im Bereich des Schneid-Gewindes 6 als auch des Trag-Gewindes 8 jeweils den Querschnitt eines gleichschenkeligen Dreiecks. Die Flanken 10, 11 des Schneid-Gewindes 6 schneiden sich unter einem Winkel $\alpha$, während sich die Flanken 12, 13 des Trag-Gewindes 8 unter einem Winkel $\beta$ schneiden. Es gilt $\alpha = \beta$, und zwar im vorliegenden Fall $\alpha = \beta = 60°$.

Das Schneid-Gewinde 6 weist einen Außendurchmesser $D_6$ auf, während das Trag-Gewinde 8 einen Außendurchmesser $D_8$ aufweist. Es gilt $D_6 > D_8$ und zwar $0,96\ D_6 \leq D_8 \leq 0,98\ D_6$. Aus dem Vorstehenden ergibt sich, dass die jeweilige Dicke a des Schneid-Gewindes 6 in Richtung der Mittel-Längs-Achse 14 des Kerns 1 etwas größer ist als die Dicke b des Trag-Gewindes 8 auf einer gemeinsamen Zylindermantel-Fläche 15 mit der Mittel-Längs-Achse 14 des Kerns 1 als Achse. Für alle gängigen Durchmesserbereiche der selbstschneidenden Schraube, also für Durchmesserbereiche von 6 bis 25 mm gilt $0,1\ mm \leq D_6 - D_8 \leq 0,6\ mm$ und bevorzugt $0,2\ mm \leq D_6 - D_8 \leq 0,4\ mm$.

Der Durchmesser $d_5$ des Kerns 1 im Bereich des Schneid-Abschnitts 5 ist geringfügig kleiner als der Durchmesser $d_7$ des Kerns 1 im Bereich des Trag-Abschnitts 7. Es gilt $0,99\ d_5 \leq d_7 \leq 0,998\ d_5$.

Das Einführ-Gewinde 9 und das Schneid-Gewinde 6 sind gehärtet, was auch für den Kern 1 in diesem Bereich gilt.

Wie sich aus dem Vorstehenden ergibt, schneidet das Schneid-Gewinde 6 beim Eindrehen der Beton-Schraube in ein Loch im Beton einen Gewindegang bzw. eine Gewindenut in den Beton. Da die Dicke a des Schneid-Gewindes 6 auf der erwähnten Zylindermantel-Fläche 15 jeweils etwas größer ist als die Dicke b des nachfolgenden Trag-Gewindes 8 ist die Reibung der Flanken 12, 13 des Trag-Gewindes 8 an den Flanken der von dem Schneid-Gewinde 6 in den Beton geschnittenen Gewindenut sehr gering, da hier ein winziger Spalt gebildet wird. Andererseits ist dieser Spalt so klein, dass das Trag-Gewinde 8 voll im Beton trägt. Das Eindringen der Schraube in den Beton ist aber stark erleichtert; das heißt das zum Eindrehen erforderliche Drehmoment ist stark reduziert. Ein weiterer Vorteil der erfindungsgemäßen Beton-Schraube besteht darin, dass das erforderliche Bohrloch weniger tief gebohrt werden muss. Bei herkömmlichen Beton-Schrauben muss das Bohrloch 10 bis 15 mm tiefer gebohrt werden, als die Schraube vollständig eingedreht lang ist, damit am unteren Ende der Bohrung ausreichend Platz für Bohrmehl einerseits und beim Einschrauben abgekratztes Material andererseits verbleibt. Beim Einschrauben der erfindungsgemäßen Beton-Schraube wird erheblich weniger Material an der Bohrlochwand abgekratzt, sodass das Bohrloch über das Schraubenende hinaus nur ca. 2 mm länger gebohrt werden muss. Bei einer großen Zahl von zu setzenden Beton-Schrauben entsteht hierdurch eine erhebliche Arbeitsersparnis. Ein weiterer Vorteil der erfindungsgemäßen Beton-Schraube besteht darin, dass die Innen-Gewinde sauberer in die Bohrlochwand geschnitten werden und hierdurch eine höhere Tragfähigkeit entsteht.

Außer als Beton-Schraube kann die erfindungsgemäße Schraube beispielsweise auch als sogenannte Asphalt-Schraube, also zum Einschrauben in Asphalt, verwendet werden.

**Patentansprüche**

1. Selbstschneidende Schraube, insbesondere Beton-Schraube, die einen Kern (1) mit einer Mittel-Längs-Achse (14) und ein Gewinde (4) auf dem Kern (1) aufweist, wobei an einen sich von einem Einführende nach außen erweiternden Einführ-Abschnitt (3) sich ein Schneid-Abschnitt (5) und an diesen ein Trag-Abschnitt (7) anschließt, wobei das am Schneid-Abschnitt (5) als Schneid-Gewinde (6) ausgebildete Gewinde (4) einen Durchmesser $D_6$ und das am Trag-Abschnitt (7) als Trag-Gewinde (8) ausgebildete Gewinde (4) einen Durchmesser $D_8$ mit der Beziehung $D_6 > D_8$ aufweist und wobei das Schneid-Gewinde (6) und das Trag-Gewinde (8) auf einer gemeinsamen Zylindermantel-Fläche (15) mit der Mittel-Längs-Achse (14) als Achse jeweils eine Dicke a bzw. b in Richtung der Mittel-Längs-Achse (14) haben, **dadurch gekennzeichnet, dass** gilt a > b.

2. Selbstschneidende Schraube nach Anspruch 1, **dadurch gekennzeichnet,**
**dass** gilt: 0,96 a ≤ b ≤ 0,98 a.

3. Selbstschneidende Schraube nach Anspruch 1 oder 2, **dadurch gekennzeichnet,**
**dass** für das Verhältnis der Durchmesser $D_6$ und $D_8$ gilt: $D_6 > D_8$.

4. Selbstschneidende Schraube nach Anspruch 3, **dadurch gekennzeichnet,**
**dass** für das Verhältnis der Durchmesser $D_6$ und $D_8$ gilt:

$$0{,}96\, D_6 \leq D_8 \leq 0{,}98\, D_6.$$

5. Selbstschneidende Schraube nach einem der Ansprüche 1 bis 4, **dadurch gekennzeichnet,**
**dass** das Schneid-Gewinde (6) und das Trag-Gewinde (8) jeweils den Querschnitt eines gleichschenkeligen Dreiecks mit sich vom Kern (1) nach außen erstreckenden Flanken (10, 11 bzw. 12, 13) haben, wobei die Flanken (10, 11 bzw. 12, 13) sich unter einem Winkel α bzw. β schneiden und **dass** gilt α = β.

6. Selbstschneidende Schraube nach einem der Ansprüche 1 bis 5, **dadurch gekennzeichnet,**
**dass** für die Differenz des Durchmesser $D_6$ des Schneid-Gewindes (6) und des Durchmessers $D_8$ des Trag-Gewindes (8) gilt:

$$0{,}1\text{ mm} \leq D_6 - D_8 \leq 0{,}6\text{ mm}.$$

7. Selbstschneidende Schraube nach Anspruch 6, **dadurch gekennzeichnet,**
**dass** für die Differenz des Durchmesser $D_6$ des Schneid-Gewindes (6) und des Durchmessers $D_8$ des Trag-Gewindes (8) gilt:

$$0{,}2\text{ mm} \leq D_6 - D_8 \leq 0{,}4\text{ mm}.$$

8. Selbstschneidende Schraube nach einem der Ansprüche 1 bis 7, **dadurch gekennzeichnet,**
**dass** der Einführ-Abschnitt (3) und der Schneid-Abschnitt (5) gehärtet sind.

Fig. 1

Fig. 2

Fig. 3

EP 1 887 233 A2

Fig. 4

EP 1 887 233 A2